Europäisches Patentamt

European Patent Office

Office européen des brevets

(11) Publication number: **0 358 393 B1**

# EUROPEAN PATENT SPECIFICATION

(45) Date of publication of patent specification: **08.03.95**  (51) Int. Cl.⁶: **C08L 23/16**, //(C08L23/16, 23:16)

(21) Application number: **89308692.6**

(22) Date of filing: **29.08.89**

The file contains technical information submitted after the application was filed and not included in this specification

(54) **Rubber composition.**

(30) Priority: **29.08.88 JP 214332/88**

(43) Date of publication of application:
**14.03.90 Bulletin 90/11**

(45) Publication of the grant of the patent:
**08.03.95 Bulletin 95/10**

(84) Designated Contracting States:
**AT BE CH DE ES FR GB GR IT LI LU NL SE**

(56) References cited:
**EP-A- 0 264 653**
**US-A- 3 884 993**

(73) Proprietor: **MITSUI PETROCHEMICAL INDUS-TRIES, LTD.**
**2-5, Kasumigaseki 3-chome**
**Chiyoda-ku**
**Tokyo 100 (JP)**

(72) Inventor: **Nakahama, Hidenari MITSUI PETRO-CHEMICAL IND. LTD.**
**3, Chigusakaigan**
**Ichihara-shi**
**Chiba (JP)**
Inventor: **Kimura, Tosiaki MITSUI PETRO-**

**CHEMICAL IND. LTD.**
**3, Chigusakaigan**
**Ichihara-shi**
**Chiba (JP)**
Inventor: **Misima, Takasi MITSUI PETRO-CHEMICAL IND. LTD.**
**3, Chigusakaigan**
**Ichihara-shi**
**Chiba (JP)**

(74) Representative: **Myerscough, Philip Boyd et al**
**J.A.KEMP & CO.**
**14, South Square**
**Gray's Inn**
**London WC1R 5LX (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.10/3.09/3.3.3)

## Description

The present invention relates to a rubber composition containing an amorphous or low crystalline ethylene-$\alpha$-olefin copolymer rubber and a liquid ethylene-$\alpha$-olefin random copolymer and having excellent processability, thermal aging resistance and wear resistance, which is particularly usable for general rubber articles, such as a belt for industrial use, a hose, and a seal.

Rubbers having a backbone which comprises a single bond are known to have excellent thermal aging resistance, and a typical example thereof is an amorphous ethylene-propylene-diene copolymer rubber (EPDM). This rubber comprises ethylene-propylene as a main component, and a diene such as dicyclopentadiene or ethylidene-norbornene is random copolymerized to permit a crosslinking by sulfur. If a stronger thermal aging resistance is required, however, an amorphous ethylene-propylene copolymer rubber (EPM) free of such a diene is preferred. In view of vulcanizing factors such as the sulfur used for crosslinking the amorphous ethylene-propylene-diene copolymer rubber, a polysulfide bond in addition to a monosulfide bond may be present in the rubber. Such a polysulfide bond is unsuitable for heat-resistant use because of its low heat-resistance. On the other hand, a vulcanizing agent such as an organic peroxide used in an amorphous ethylene-$\alpha$-olefin copolymer rubber, particularly in an amorphous ethylene-propylene copolymer rubber, has an excellent thermal stability because a sigma bonding is formed between molecules. ethylene-$\alpha$-olefin copolymer rubbers still have an unsatisfactory thermal aging resistance or wear resistance as a material of maintenance-free products such as a heat-resistant belt or hose which can be used for a long period without impairing their properties. As a means for solving the problem, an increase of the ethylene content in an amorphous ethylene-$\alpha$-olefin copolymer is known, but an amorphous ethylene-$\alpha$-olefin copolymer rubber having a high content of ethylene has a remarkably inferior roll process-ability, and thus is not used in practice for the forming of articles.

Currently, a material having properties antagonistic to each other, such as a high ethylene content and excellent roll processability, is required, but commercially available amorphous ethylene-$\alpha$-olefin copolymer rubbers, in particular an amorphous ethylene-propylene copolymer rubber, are now designed with a stress on the roll processability thereof and have a low ethylene content of about 60 mole%, and thus such copolymers have problems with regard to the thermal aging resistance or wear resistance thereof.

EP-A-264653 discloses a composition comprising (1) at least one copolymer rubber selected from EPM and EPDM and (2) a decomposition product of such a copolymer rubber obtained by thermal degradation and having an intrinsic viscosity of 0.02 to 0.60 dl/g as measured in xylene at 70°C.

Accordingly, an object of the present invention is to provide a rubber composition having an excellent processability, thermal aging resistance and wear resistance, whereby the article hardness thereof can be optionally controlled without impairing these properties.

The present invention provides a rubber composition comprising (A) 100 parts by weight of an amorphous or low crystalline ethylene-$\alpha$-olefin copolymer rubber having an ethylene content of 70 to 90 mole%, a molecular weight distribution (Mw/Mn) of 3.0 or more and a Mooney viscosity $ML_{1+4}$ (100°C) of 5 to 80, preferably 10 to 60 and (B) 5 to 50 parts by weight of a liquid ethylene-$\alpha$-olefin random copolymer having an ethylene content of 60 to 90 mole% and an intrinsic viscosity [$\eta$] of 0.01 to 0.4 dl/g as measured in decalin at 135°C.

The amorphous or low-crystalline ethylene-$\alpha$-olefin copolymer rubber (A) usable in the present invention is an amorphous or low crystalline ethylene-$\alpha$-olefin copolymer comprising an ethylene component and an $\alpha$-olefin component. The $\alpha$-olefin includes those having 3 to 20 carbon atoms: Examples of such $\alpha$-olefins are propylene, 1-butene, 1-hexene, 4-methyl-1-pentene, 3-methyl-1-pentene, 1-octene, 1-decene, 1-dodecene, 1-tetradecene, 1-hexadecene, 1-octadecene and 1-eicocene. Particularly, the use of propylene or 1-butene is preferable.

Such an amorphous or low-crystalline ethylene-$\alpha$-olefin copolymer rubber (A) has an ethylene content of 70 to 90 mole%, preferably 75 to 85 mole%. When the ethylene content is less than 70 mole%, the thermal aging resistance and wear resistance are lowered, and when the ethylene content is more than 90 mole%, the copolymer rubber becomes resinous and the roll processability becomes very poor. In addition, the article hardness is excessively increased to an undesirable value.

The molecular weight distribution (Mw/Mn) of the amorphous or low-crystalline ethylene-$\alpha$-olefin copolymer rubber (A) is 3.0 or more, preferably 5.0 or more. The amorphous or low-crystalline ethylene-$\alpha$-olefin copolymer rubber (A) having such a molecular weight distribution has extreme parts; one being a part having a high ethylene content and a high molecular weight and the other being a part having a high ethylene content and a low molecular weight. Therefore, such a copolymer rubber has a good processability and a practical tensile strength, and has an excellent thermal aging resistance and wear resistance.

The amorphous or low-crystalline ethylene-α-olefin copolymer rubber (A) has a Mooney viscosity $ML_{1+4}$ (100°C) of 5 to 80, preferably 10 to 60.

The other liquid ethylene-α-olefin random copolymer (B) is an amorphous or low-crystalline ethylene-α-olefin random copolymer comprising an ethylene content and an α-olefin component and exhibiting fluidity at a usual temperature. The α-olefin preferably has 3 to 20 carbon atoms, and specifically has the same content as the above-mentioned component (A).

Such a liquid ethylene-α-olefin random copolymer (B) has an ethylene content of 60 to 90 mole%, preferably 75 to 85 mole%, and an intrinsic viscosity $[\eta]$ measured in decalin at 135°C of 0.01 to 0.4 dl/g, preferably 0.1 to 0.4 dl/g.

Such a liquid ethylene-α-olefin random copolymer (B) will not substantially lower the thermal aging resistance of the substrate rubber (A) and can provide the rubber composition with an excellent processability while maintaining an article hardness at the same level as the hardness of an article in which an oil is incorporated.

The amount of the liquid ethylene-α-olefin random copolymer (B) to be incorporated is 5 to 50 parts by weight to 100 parts by weight of the amorphous or low-crystalline ethylene-α-olefin copolymer rubber (A).

The rubber composition of the present invention may be incorporated with additives currently used for rubber, such as a vulcanizing agent, a reinforcing agent, a softening agent, an anti-aging agent, a metal activating agent, a processing aid or other additives.

The vulcanizing agents usable in the present invention are those which can vulcanize a usual ethylene-α-olefin copolymer rubber. Examples of the typical vulcanizing agent usable in the present invention are an organic peroxide such as dicumyl peroxide, di-tert-butyl peroxide, 2,5-dimethyl-2,5-di-(tert-butylperoxy)-hexane, 2,5-dimethyl-2,5-di-(tert-butylperoxy)-3-hexyne, 1,3-bis(tert-butyloxyisopropyl)benzene, 1,1-bis-(tert-butylperoxy)-3,3,5-trimethylcyclohexane, n-butyl-4,4-bis-(tert-butylperoxy)valerate, benzoyl peroxide, p-chlorobenzoyl peroxide, 2,4-dichlorobenzoyl peroxide, tert-butylperoxy benzoate, tert-butylperoxyisopropyl carbonate, diacetyl peroxide, lauroyl peroxide and tert-butylcumyl peroxide.

Examples of the reinforcing agent usable in the present invention are a variety of carbon blacks such as SRF, GPE, FEF, HAF, ISAF, SAF, FT and MT; pulverized silicate; or any mixture thereof.

The softening agent usable in the present invention includes, for example, petroleum type substances such as a process oil, a lubricating oil, a paraffin, a liquid paraffin, a petroleum asphalt and a vaseline; coal tars such as a coal tar and a coal tar pitch; fats such as a caster oil, a linseed oil, a rape oil and a coconut oil; waxes such as a tall oil, a factice, a beeswax, a carnauba wax and a lanolin; or any mixture thereof.

The anti-aging agent usable in the present invention includes, for example, aromatic secondary amines such as a phenylnaphtylamine and N,N'-di-2-naphtyl-p-phenylenediamine; phenol type stabilizing agents such as dibutylhydroxytoluene and tetrakis-[methylene-(3,5-di-t-butyl-4-hydroxy)hydrocinnamate]methane; thioether type stabilizing agents such as a bis-[2-methyl-4-{3-n-alkylthiopropionyloxy}-5-t-butylphenyl]-sulfide; dithiocarbamic acid type stabilizing agents such as nickel dibutyl dithiocarbamate; or any mixture thereof.

The metal activating agent usable in the present invention includes, for example, magnesium oxide, a zinc higher fatty acid, red lead oxide, litharge and calcium oxide; or any mixture thereof.

The processing aid usable in the present invention includes, for example, ricinoleic acid, stearic acid, palmitic acid, lauric acid, barium stearate, calcium stearate, zinc stearate or esters of the aforementioned acids, higher fatty acids, a salt or ester thereof, or any mixture thereof.

The additives usable in the present invention are those popularly used, in addition to the above-mentioned, and these additives include a vulcanizing aid, a heat resistant stabilizing agent, a weathering agent, a filling agent and a coloring agent.

These additives for rubber may be incorporated in the composition in an appropriate amount according to necessity and within the range wherein the object of the present invention will not be impaired.

The above-mentioned components (A) and (B) and a variety of additives for rubber are kneaded in a conventional well-known kneading apparatus such as an open type mixing roll, a non-open type Banbury mixer, an extruder, a kneader and a continuous mixer, to give a rubber composition.

The rubber composition thus obtained will not substantially vary the thermal aging resistance or wear resistance of the amorphous or low-crystalline ethylene-α-olefin copolymer rubber having a high ethylene content, and enhances the kneading process-abilities such as rolling, banburying, calendering or the like, and the article hardness can be freely changed by changing the amount of the component (B).

The rubber composition according to the present invention can be used appropriately for rubber articles wherein an amorphous or low-crystalline ethylene-α-olefin copolymer rubber may be used, particularly for rubber articles such as a belt, for industrial use, hose or seal, for which a thermal aging resistance and wear resistance are required.

As described above, the rubber composition of the present invention comprises the components (A) and (B), and thus has an excellent processability, thermal aging resistance and wear resistance. The hardness of an article made of the rubber composition can be freely controlled without impairing these properties.

Example

The present invention will now be further illustrated by the following Examples. All parts in these Examples are by weight.

Evaluation tests in the Examples are conducted according to the following methods:

(1) Roll processability:

The wrapping properties on a forward roll are compared.
E: very good; G: good; F: normal; P: poor

(2) Wear resistance:

The evaluation was made by the DIN wear resistance test. The amount worn is indicated by ml.

(3) Thermal aging resistance:

The evaluation was conducted by determining the retention rate of tensile strength at break and tensile elongation at break of original samples before tests and respective samples which had been left to stand in a thermostatic bath at 180°C for 1, 3, 5, 7 and 10 days:

$$\text{Strength retention at break } [AR(T_B)] = \frac{\text{Tensile strength after thermal aging}}{\text{Tensile strength of original sample}} \times 100$$

$$\text{Elongation retention at break } [AR(E_B)] = \frac{\text{Tensile elongation after thermal aging}}{\text{Tensile elongation of original sample}} \times 100$$

(4) Dry physical properties:

Tensile stress on 300% elongation (M 300), tensile strength at break ($T_B$), elongation at break ($E_B$), and hardness ($H_S$) were measured by a JIS (Japanese Industrial Standards) A hardness meter according to JIS K 6301.

Example 1

A 20 parts amount of a liquid ethylene-propylene random copolymer having an ethylene content of 75 mole% and an intrinsic viscosity $[\eta]$ of 0.24 dl/g, 1 part of stearic acid, 5 parts of zinc white, 55 parts of FEF carbon black (ASAHI CARBON K.K., trade mark), 10 parts of a paraffin oil (IDEMITSU KOSA, K.K., trade mark: DIANA PROCESS OIL PW380), 1.0 part of an amine anti-aging agent (OUCHI SHINKO KAGAKU K.K., trade mark: NOKRAK 224), and 1.5 parts of benzimidazole (OUCHI SHINKO KAGAKU K.K., trade mark: NOKRAK MB) were kneaded with 100 parts of an amorphous ethylene-propylene copolymer rubber (EPR) having an ethylene content of 70 mole%, an $M_w/M_n$ of 7.0, and a Mooney viscosity $ML_{1+4}$ (100°C) of 30, and 7.8 parts of dicumyl peroxide (content: 40% by weight) were added to the kneaded product to conduct roll kneading. The kneaded product was taken out portionwise in the form of a sheet and subjected to vulcanization to form test pieces. The test pieces thus obtained were tested according to the methods

4

described above. The results are shown in Table 1.

Examples 2 to 4

Test pieces were prepared and tested in the same manner as in Example 1, except that the ethylene content of the amorphous ethylene-propylene copolymer rubber was changed to 75 mole%, 80 mole%, and 85 mole%, respectively. The results are shown in Table 1.

Examples 5 to 8

Test pieces were prepared and tested in the same manner as in Example 1, except that the amorphous ethylene-propylene copolymer rubber in Example 3 was used and the ethylene content of the liquid ethylene-propylene random copolymer was changed to 60 mole%, 70 mole% and 80 mole%, respectively. The results are shown in Table 2.

Examples 9 to 12

Test pieces were made and tested in the same manner as in Example 1, except that the amorphous ethylene propylene copolymer rubber in Example 3 was used and the incorporated amount of the liquid ethylene-propylene random copolymer having an ethylene content of 75% and an intrinsic viscosity $[\eta]$ of 0.2 dl/g was changed to 5 parts, 20 parts, 25 parts and 30 parts, respectively. The results are shown in Table 3.

## Table 1

| | Example 1 | Example 2 | Example 3 | Example 4 |
|---|---|---|---|---|
| EPR: | | | | |
| Ethylene content (mole %) | 70 | 75 | 80 | 85 |
| Mooney viscosity $ML_{1+4}$ (100°C) | 30 | 30 | 30 | 30 |
| Mw/Mn | 7.0 | 7.2 | 6.9 | 7.0 |
| Liquid ethylene random copolymer: | | | | |
| Ethylene content (mole %) | 75 | 75 | 75 | 75 |
| $[\eta]$ (dl/g) | 0.24 | 0.24 | 0.24 | 0.24 |
| $M_{300}$ (kg/cm$^2$) | 30 | 48 | 53 | 65 |
| $T_B$ (kg/cm$^2$) | 105 | 125 | 136 | 155 |
| $E_B$ (%) | 740 | 640 | 630 | 530 |
| HS (JIS A) | 63 | 65 | 68 | 71 |
| Roll processability | E | E | G | F |
| Wear resistance (ml) | 149 | 142 | 130 | 118 |

## Table 1 (continued)

|  | Example 1 | Example 2 | Example 3 | Example 4 |
|---|---|---|---|---|
| Thermal aging resistance |  |  |  |  |
| AR ($T_B$) (%) |  |  |  |  |
| After 1 day | 98 | 99 | 99 | 99 |
| 3 days | 75 | 80 | 87 | 92 |
| 5 days | 45 | 50 | 63 | 78 |
| 7 days | 25 | 30 | 36 | 65 |
| 10 days | 12 | 18 | 25 | 35 |
| AR ($E_B$) (%) |  |  |  |  |
| After 1 day | 105 | 105 | 106 | 102 |
| 3 days | 100 | 100 | 105 | 100 |
| 5 days | 87 | 90 | 97 | 97 |
| 7 days | 65 | 70 | 76 | 94 |
| 10 days | 29 | 30 | 35 | 45 |

EP 0 358 393 B1

<u>Table 2</u>

|  | Example 5 | Example 6 | Example 7 | Example 8 |
|---|---|---|---|---|
| EPR: | | | | |
| Ethylene content (mole %) | 80 | 80 | 80 | 80 |
| Mooney viscosity $ML_{1+4}$ (100°C) | 30 | 30 | 30 | 30 |
| Mw/Mn | 7.5 | 7.4 | 7.2 | 7.4 |
| Liquid ethylene random copolymer: | | | | |
| Ethylene content (mole %) | 60 | 70 | 80 | 85 |
| $[\eta]$ (dl/g) | 0.23 | 0.25 | 0.25 | 0.26 |
| $M_{300}$ (kg/cm$^2$) | 50 | 52 | 56 | 60 |
| $T_B$ (kg/cm$^2$) | 130 | 132 | 142 | 146 |
| $E_B$ (%) | 640 | 620 | 630 | 620 |
| HS (JIS A) | 66 | 68 | 68 | 69 |
| Roll processability | G | G | G | G |
| Wear resistance (ml) | 130 | 130 | 128 | 125 |

8

## Table 2 (continued)

| | Example 5 | Example 6 | Example 7 | Example 8 |
|---|---|---|---|---|
| Thermal aging resistance | | | | |
| AR ($T_B$) (%) | | | | |
| After 1 day | 93 | 99 | 100 | 100 |
| 3 days | 81 | 85 | 90 | 91 |
| 5 days | 52 | 60 | 70 | 72 |
| 7 days | 25 | 34 | 51 | 53 |
| 10 days | 12 | 21 | 30 | 39 |
| AR ($E_B$) (%) | | | | |
| After 1 day | 111 | 106 | 107 | 107 |
| 3 days | 108 | 104 | 105 | 102 |
| 5 days | 94 | 96 | 100 | 99 |
| 7 days | 64 | 73 | 80 | 85 |
| 10 days | 19 | 30 | 50 | 52 |

EP 0 358 393 B1

## Table 3

| | Example 9 | Example 10 | Example 11 | Example 12 |
|---|---|---|---|---|
| EPR: | | | | |
| Ethylene content (mole %) | 80 | 80 | 80 | 80 |
| Mooney viscosity $ML_{1+4}$ (100°C) | 30 | 30 | 30 | 30 |
| Mw/Mn | 7.3 | 7.1 | 7.8 | 7.8 |
| Liquid ethylene random copolymer: | | | | |
| Ethylene content (mole %) | 75 | 75 | 75 | 75 |
| $[\eta]$ (dl/g) | 0.24 | 0.24 | 0.24 | 0.24 |
| Incorporated amount (phr) | 5 | 20 | 25 | 30 |
| $M_{300}$ (kg/cm$^2$) | 79 | 53 | 45 | 40 |
| $T_B$ (kg/cm$^2$) | 162 | 136 | 121 | 118 |
| $E_B$ (%) | 530 | 630 | 640 | 680 |
| HS (JIS A) | | | | |
| Roll processability | E | E | E | E |
| Wear resistance (ml) | 119 | 128 | 135 | 142 |

10

EP 0 358 393 B1

Table 3 (continued)

|  | Example 9 | Example 10 | Example 11 | Example 12 |
|---|---|---|---|---|
| **Thermal aging resistance** | | | | |
| AR ($T_B$) ($\%$) | | | | |
| After 1 day | 99 | 99 | 93 | 90 |
| 3 days | 90 | 87 | 81 | 80 |
| 5 days | 70 | 63 | 52 | 49 |
| 7 days | 48 | 36 | 25 | 20 |
| 10 days | 35 | 25 | 19 | 15 |
| AR ($E_B$) ($\%$) | | | | |
| After 1 day | 111 | 106 | 108 | 108 |
| 3 days | 108 | 105 | 100 | 99 |
| 5 days | 94 | 97 | 95 | 90 |
| 7 days | 64 | 76 | 70 | 65 |
| 10 days | 19 | 35 | 30 | 28 |

**Claims**

1. A rubber composition comprising (A) 100 parts by weight of an amorphous or low crystalline ethylene-$\alpha$-olefin copolymer rubber having an ethylene content of 70 to 90 mole%, a molecular weight distribution (Mw/Mn) of 3.0 or more and a Mooney viscosity $ML_{1+4}$ (100°C) of 5 to 80; and (B) 5 to 50 parts by weight of a liquid ethylene-$\alpha$-olefin random copolymer having an ethylene content of 60 to 90 mole% and an intrinsic viscosity [$\eta$] of 0.01 to 0.4 dl/g as measured in decalin at 135°C.

2. A composition according to claim 1, wherein the $\alpha$-olefin of said rubber (A) and/or of said liquid copolymer (B) is at least one $\alpha$-olefin of 3 to 20 carbon atoms.

3. A composition according to claim 2, wherein said $\alpha$-olefin is at least one of propylene, 1-butene, 1-hexene, 4-methyl-1-pentene, 3-methyl-1-pentene, 1-octene, 1-decene, 1-dodecene, 1-tetradecene, 1-hexadecene, 1-octadecene and 1-eicocene.

4. A composition according to claim 1, 2 or 3, wherein the ethylene content of said rubber (A) is 75 to 85 mole%.

5. A composition according to any one of the preceding claims wherein the molecular weight distribution (Mw/Mn) of said rubber (A) is 5.0 or more.

11

6. A composition according to any one of the preceding claims wherein the Mooney viscosity $ML_{1+4}$ - (100°C) of said rubber (A) is 10 to 60.

7. A composition according to any one of the preceding claims wherein the intrinsic viscosity $[\eta]$ of said liquid copolymer (B) is 0.1 to 0.4 dl/g.

8. A composition according to any one of the preceding claims wherein the ethylene content of said liquid copolymer (B) is 75 to 85 mole%.

9. Articles obtained by shaping and vulcanizing a composition as claimed in any one of the preceding claims.

**Patentansprüche**

1. Eine Gummizusammensetzung, die (A) 100 Gew.-Teil eines amorphen oder niedrigkristallinen Ethylen-$\alpha$-Olefin-Copolymer-Gummis mit einem Ethylengehalt von 70 bis 90 Mol-%, einer Molekulargewichtsverteilung (Mw/Mn) von 3,0 oder mehr und einer Mooney-Viskosität $ML_{1+4}$ (100°C) von 5 bis 80; und (B) 5 bis 50 Gew.-Teile eines flüssigen Ethylen-$\alpha$-Olefin-Zufallscopolymers mit einem Ethylengehalt von 60 bis 90 Mol-% und einer Intrinsic-Viskosität $[\eta]$ von 0,01 bis 0,4 dl/g, wie in Decalin bei 135°C gemessen, umfaßt.

2. Zusammensetzung nach Anspruch 1, worin das $\alpha$-Olefin des Gummis (A) und/oder des flüssigen Copolymers (B) wenigstens ein $\alpha$-Olefin mit 3 bis 20 Kohlenstoffatomen ist.

3. Zusammensetzung nach Anspruch 2, worin das $\alpha$-Olefin wenigstens eines aus Propylen, 1-Buten, 1-Hexen, 4-Methyl-1-penten, 3-Methyl-1-penten, 1-Octen, 1-Decen, 1-Dodecen, 1-Tetradecen, 1-Hexadecen, 1-Octadecen und 1-Eicocen ist.

4. Zusammensetzung nach Anspruch 1, 2 oder 3, worin der Ethylengehalt des Gummis (A) 75 bis 85 Mol-% beträgt.

5. Zusammensetzung nach einem der vorangegangenen Ansprüche, worin die Molekulargewichtsverteilung (Mw/Mn) des Gummis (A) 5,0 oder mehr beträgt.

6. Zusammensetzung nach einem der vorangegangenen Ansprüche, worin die Mooney-Viskosität $ML_{1+4}$ - (100°C) des Gummis (A) 10 bis 60 beträgt.

7. Zusammensetzung nach einem der vorangegangenen Ansprüche, worin die Intrinsic-Viskosität $[\eta]$ des flüssigen Copolymers (B) 0,1 bis 0,4 dl/g beträgt.

8. Zusammensetzung nach einem der vorangegangenen Ansprüche, worin der Ethylengehalt des flüssigen Copolymers (B) 75 bis 85 Mol-% beträgt.

9. Gegenstände, der durch Formen und Vulkanisieren einer nach einem der vorangegangenen Ansprüche definierten Zusammensetzung erhalten wurde.

**Revendications**

1. Composition de caoutchouc comprenant (A) 100 parts en poids d'un caoutchouc copolymère éthylène-$\alpha$-oléfine amorphe ou faiblement cristallin ayant une teneur en éthylène de 70 à 90% en moles, une distribution de poids moléculaire (Mw/Mn) de 3,0 ou plus et une viscosité de Mooney $ML_{1+4}$ (100°C) de 5 à 80 et (B) de 5 à 50 parts en poids d'un copolymère aléatoire éthylène-$\alpha$-oléfine liquide ayant une teneur en éthylène de 60 à 90% en moles et une viscosité intrinsèque $(\eta)$ de 0,01 à 0,4 dl/g, mesurée dans du décalin à 135°C.

2. Composition suivant la revendication 1, dans laquelle l'$\alpha$-oléfine dudit caoutchouc (A) et/ou dudit copolymère liquide (B) est au moins une $\alpha$-oléfine de 3 à 20 atomes de carbone.

3. Composition suivant la revendication 2, dans laquelle ladite $\alpha$-oléfine est au moins l'un parmi le propylène, 1-butène, 1-hexène, 4-méthyle-1-pentène, 3-méthyle-1-pentène, 1-octène, 1-décène, 1-dodécène, 1-tétradécène, 1-hexadécène, 1-octadécène et 1-éicocène.

4. Composition suivant la revendication 1, 2 ou 3, dans laquelle la teneur en éthylène dudit caoutchouc (A) est de 75 à 85% en moles.

5. Composition suivant l'une ou l'autre des revendications précédentes, dans laquelle la distribution de poids moléculaire (Mw/Mn) dudit caoutchouc (A) est de 5,0 ou plus.

6. Composition suivant l'une ou l'autre des revendications précédentes, dans laquelle la viscosité Mooney $ML_{1+4}$ (100°C) dudit caoutchouc (A) est de 10 à 60.

7. Composition suivant l'une ou l'autre des revendications précédentes, dans laquelle la viscosité intrinsèque ($\eta$) dudit copolymère liquide (B) est de 0,1 à 0,4 dl/g.

8. Composition suivant l'une ou l'autre des revendications précédentes, dans laquelle la teneur en éthylène dudit copolymère liquide (B) est de 75 à 85% en moles.

9. Articles obtenus par façonnage et vulcanisation d'une composition suivant l'une ou l'autre des revendications précédentes.